# EUROPÄISCHE PATENTSCHRIFT

(11) **EP 0 488 936 B1**
(45) Veröffentlichungstag und Bekanntmachung des Hinweises auf die Patenterteilung: **14.06.1995**
(21) Anmeldenummer: 91710048.9
(22) Anmeldetag: 27.11.1991
(51) Int. Cl.: B60R 21/26, F42B 3/04, F42B 3/24

(54) **Gasgenerator, insbesondere Rohrgasgenerator für ein aufblasbares Aufprallkissen**
Gas generator, in particulier tubular gas generator for an inflatable cushion
Générateur de gaz, en particulier générateur de gaz tubulaire pour un coussin gonflable

(30) Priorität: 28.11.1990 DE 4037768
(43) Veröffentlichungstag der Anmeldung: 03.06.1992
(73) Patentinhaber: Dynamit Nobel Aktiengesellschaft, 53839 Troisdorf (DE)
(72) Erfinder: Brede, Uwe, W-8510 Fürth (DE); Kraft, Josef, W-8438 Berg (DE); Scheiderer, Gerrit, W-8510 Fürth (DE); Reimer, Jens-Peter, W-8522 Herzogenaurach (DE); Iltschenko, Axel, W-8510 Fürth (DE)

(56) Entgegenhaltungen:
- US-A- 4 005 876
- US-A- 4 858 951

## Beschreibung

Die Erfindung betrifft einen Gasgenerator, insbesondere Rohrgasgenerator für ein aufblasbares Aufprallkissen.

Aus US-PS 40 05 876 ist ein (Rohr-)Gasgenerator bekannt, der ein Außenrohr aufweist, in dessen Wandung (Mantel) Gasaustrittsöffnungen angeordnet sind und dessen stirnseitige Enden verschlossen sind. In dem Außenrohr befindet sich ein ebenfalls in seinem Mantel mit Gasaustrittsöffnungen versehenes Innenrohr, dessen Außendurchmesser kleiner ist als der Innendurchmesser des Außenrohres, so daß sich zwischen den beiden exzentrischen Rohren ein Zwischenraum zur Aufnahme eines Filter- und Kühldrahtgeflechts bildet. Das Innenrohr, dessen axiale Länge geringer ist als diejenige des Außenrohres, ist mit (druck-)gasentwickelndem Material ausgefüllt (im folgenden auch mit druckgaserzeugender Ladung - beispielsweise in Form von Pellets - bezeichnet), das durch eine Anzündeinheit gezündet wird. Das bei Zündung des gasentwickelnden Materials entstehende Gas tritt über die Gasaustrittsöffnungen des Innenrohres durch das Filtermaterial hindurch, um über die Gasaustrittsöffnungen in dem Außenrohr nach außen zu gelangen. Der Gasgenerator ist im Falle seiner Verwendung für ein Aufprallschutz-Gaskissen in einem zu einer Seite hin offenen Gehäuse angeordnet, wobei diese Öffnung durch ein zusammengelegtes Gewebe, das eigentliche aufblasbare Gaskissen, verschlossen ist.

An dem axialen einen Ende der beiden Rohre ist ein die Rohre miteinander verbindender Verschlußdeckel angeordnet, der von dem Außenrohr in dessen Endabschnitt umschlossen ist. In der Umfangsfläche des Verschlußdeckels ist eine Umfangsnut ausgebildet, in deren Bereich das Außenrohr eingeschnürt ist. Die Innenseite des Verschlußdeckels ist mit einer Ausnehmung versehen, in die das axiale Ende des Innenrohres hineingesteckt ist. Bei der Zündung der gasentwickelnden Ladung entstehen in dem Innenrohr und in dem Zwischenraum zwischen den beiden Rohren relativ hohe Drücke. Diesen hohen Drücken muß der wie oben beschrieben an dem Außenrohr verankerte Verschlußdeckel standhalten. Wegen der kreisbogenförmigen Ausbildung der Umfangsnut und des durch die Einschnürung entstandenen Umfangsinnenvorsprungs besteht die Gefahr, daß sich der bei Druckbeaufschlagung unter Umständen verkantende Verschlußdeckel vom Außenrohr ablöst. Dies kann zu Beschädigungen der um den Gasgenerator herum angeordneten Einheiten führen. Das über den abgelösten Verschlußdeckel austretende Gas wird nicht gereinigt und führt deshalb Verbrennungsrückstände mit, die ebenfalls Beschädigungen verursachen können. Schließlich wirkt sich eine Ablösung des Verschlußdeckels auch negativ auf den Verbrennungsprozeß und die Gasentwicklung aus.

Der Erfindung liegt die Aufgabe zugrunde, einen Gasgenerator, insbesondere einen Rohrgasgenerator für ein aufblasbares Aufprallkissen, zu schaffen, bei dem die Verschlußdeckel an den axialen Enden des Außenrohres gegen ein Ablösen auch bei Verkantung des Verschlußdeckels zuverlässig gesichert gehalten sind.

Zur Lösung dieser Aufgabe wird mit der Erfindung ein Gasgenerator vorgeschlagen, der die folgenden Merkmale aufweist:
- ein Außenrohr,
- Verschlußdeckel an den beiden stirnseitigen Enden des Außenrohres, wobei das Außenrohr die Verschlußdeckel zumindest teilweise seitlich umschließt, und
- eine Umfangsnut an der Umfangsfläche eines jeden Verschlußdeckels, die nach innen gerichtete Innenvorsprünge in dem den jeweiligen Verschlußdeckel umschließenden Endabschnitt des Außenrohres aufnimmt,
- wobei die Innenvorsprünge als einzelne, durch Mehrfachkerbung der die Verschlußdeckel umschließenden Endabschnitte des Außenrohres im Bereich der Umfangsnuten des Verschlußdeckels entstandene, gestanzte, nach innen gerichtete und im wesentlichen V-förmige Außenrohrverformungen ausgebildet sind.

Die Innenvorsprünge werden nach der Erfindung durch Mehrfachkerbung der Endabschnitte des Außenrohres mittels eines Kerbwerkzeuges erzeugt. Durch Eindrücken (Verstemmen) des Außenrohres mittels Kerb- oder Kneifwerkzeugen entstehen infolge der örtlichen Rohrverformung - im Querschnitt durch das Außenrohr betrachtet -V-förmige Innenvorsprünge, deren spitz zulaufende Enden vorzugsweise an dem Boden der Umfangsnut der Verschlußdeckel anliegen. Beim Kerben des Außenrohres werden gleichzeitig auch Stegabschnitte aus dem Außenrohr ausgeschnitten oder gestanzt. Dabei bildet der Verschlußdeckel die Matrize zum Erzeugen dieser Stanzungen. Die (axiale) Breite der Innenvorsprünge ist dabei gleich der Breite der Umfangsnut in den Verschlußdeckeln. Auf diese Weise wird sowohl eine radiale als auch eine axiale Bewegung der Verschlußdeckel und damit des Innenrohres relativ zum Außenrohr verhindert.

Der Vorteil der Ausbildung der Innenvorsprünge durch Mehrfachkerbung der Außenrohr-Endabschnitte bei in diesen eingesetzten Verschlußdeckeln besteht darin, daß die - bezogen auf die Längserstreckung des Rohrgasgenerators - radialen Seitenflächen der Innenvorsprünge an den radialen Seitenflächen der Umfangsnuten anliegen. Die Umfangsnut weist dabei einen rechteckigen Querschnitt mit einem entlang dem Umfang verlaufenden Nutgrund und dazu rechtwinklig verlaufenden radialen Seiteninnenflächen auf. Bei Ausübung einer axialen Kraft auf den Verschlußdeckel, wie sie bei der Verbrennung der gasentwickelnden Ladung entsteht, wirken auf die Innenvorsprünge keine Kraftkomponenten in radialer Richtung, da die Anlageflächen zwischen den Innenvorsprüngen und den Umfangsnuten quer zur Kraftrichtung verlaufen. Bei einer axialen Bewegung oder bei einer Verkantung des Verschlußdeckels werden die Innenvorsprünge also "auf Scherung" beansprucht; gerade diesen Scherbeanspruchungen widerstehen aber die durch Kerbung des Außenrohres gebildeten Innenvorsprünge besonders wirkungsvoll.

Vorzugsweise steht das Außenrohr an seinen stirnseitigen Enden jeweils über die Verschlußdeckel über, wobei dieser Ringüberstand um die Verschlußdeckelkante umgebördelt bzw. umgelegt ist. Durch die Umbördelung bzw. Umlegung der Außenrohrenden wird eine zusätzliche Haltekraft auf die Verschlußdeckel ausgeübt. Ferner erhöht sich die Steifigkeit und damit die Festigkeit der Verbindung zwischen den Verschlußdeckeln und dem Außenrohr. Die Umbördelung bzw. Umlegung der Außenrohrenden wirkt sich vorteilhaft auf eine Erhöhung der Widerstandsfähigkeit der Außenrohrendabschnitte bei einer Verkantung der Verschlußdeckel aus. Denn durch die Umlegung wird eine vergrößerte Biegehöhe an den Rohrenden erreicht, die einer Aufweitung der Außenrohrenden bei einer Verkantung der Verschlußdeckel entgegenwirkt.

Bei einer Doppelrohrkonstruktion mit Außen- und mit Innenrohr sowie der erfindungsgemäßen Befestigung der Verschlußdeckel an dem Außenrohr ist vorteilhafterweise vorgesehen, daß jeder Verschlußdeckel an seiner dem stirnseitigen Ende des Innenrohres zugewandten Innenseite eine Ausnehmung aufweist, in die der stirnseitige Endabschnitt des das gasentwickelnde Material enthaltenden Innenrohres eingesteckt ist und die das Innenrohr an dessen einem stirnseitigen Ende umschließt.

Nachfolgend wird anhand der Figuren ein Ausführungsbeispiel der Erfindung näher erläutert. Im einzelnen zeigen:
- Fig. 1: eine Außenansicht eines Gasgenerators teilweise aufgebrochen und in diesem Bereich im Längsquerschnitt,
- Fig. 2: einen Längsschnitt durch einen Endabschnitt des Gasgenerators nach Figur 1 und
- Fig. 3: eine Querschnittsansicht entlang der Linie III-III der Figur 2.

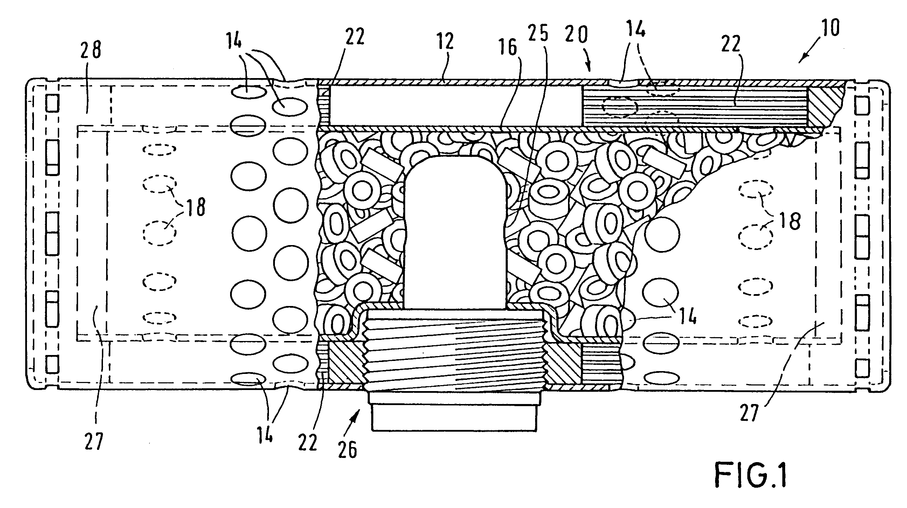

In Figur 1 ist ein Rohrgasgenerator 10 insbesondere für einen Kraftfahrzeug-Airbag in Außenansicht, teilweise aufgebrochen und geschnitten dargestellt. Der Rohrgasgenerator 10 weist ein Metall-Außenrohr 12 auf, in dessen Mantel mehrere Gasaustrittsöffnungen 14 ausgebildet sind. Die Gasaustrittsöffnungen 14 sind gleichmäßig verteilt über vier Umfangslinien des Außenrohres 12 angeordnet. Die Gasaustrittsöffnungen 14 befinden sich im wesentlichen im mittleren Abschnitt des Außenrohres 12. Innerhalb des Außenrohres 12 ist ein koaxial zu diesem angeordnetes Innenrohr 16 aus Metall untergebracht. In den axialen Endabschnitten des Mantels des Innenrohres 16 sind ebenfalls Gasaustrittsöffnungen 18 ausgebildet, wobei diese Gasaustrittsöffnungen 18 gleichmäßig über zwei Umfangslinien im Bereich der Endabschnitte des Innenrohres 16 verteilt angeordnet sind. Zwischen den Gasaustrittsöffnungen 14 des Außenrohres 12 und den Gasaustrittsöffnungen 18 des Innenrohres 16 besteht also ein axialer Abstand.

Der Außendurchmesser des Innenrohres 16 ist kleiner als der Innendurchmesser des Außenrohres 12, so daß zwischen dem Außen- und dem Innenrohr ein Ringzwischenraum 20 entsteht. Dieser Ringzwischenraum ist in seinen sich zwischen den Gasaustrittsöffnungen 14,18 der beiden Rohre 12,16 erstreckenden Bereich mit Metallfilter-Paketen 22 (Edelstahl-Drahtgeflechtmatten) ausgefüllt.

Das Innenrohr 16 ist mit gasentwickelndem Material auf Natriumazid-Basis ausgefüllt, das bei seiner Verbrennung Druckgas erzeugt. Das gasentwickelnde Material, auch druckgaserzeugende Ladung genannt, liegt in Form von sogenannten Pellets 24 vor, die ungeordnet in dem Innenrohr 16 untergebracht sind. Eine elektrische Anzündeinheit 26 zum Zünden der druckgaserzeugenden Ladung ist an den beiden Rohren 12,16 befestigt und ragt durch eine Öffnung im Innenrohr 16 in dieses teilweise hinein.

Der Gasgenerator 10 ist an den stirnseitigen Enden des Außenrohres 12 durch scheibenähnliche Verschlußdeckel 28 verschlossen. An den Enden des Innenrohres 16 sind federelastische, kompressible Scheibenelemente 27 aus Keramikfilz oder -gewebe angeordnet, die sich über die gesamte Innenquerschnittsfläche des Innenrohres 16 erstrecken und einerseits gegen die Pellets 24 und andererseits gegen die Verschlußdeckel 28 abgestützt sind, wobei sie die Pellets 24 mit Federkraft zusammenhalten. Diese Metall-Verschlußdeckel 28 halten und positionieren auch das Innenrohr 16 in später noch zu beschreibender Weise.

Nachfolgend soll kurz die Funktionsweise des in Figur 1 dargestellten Gasgenerators 10 beschrieben werden. Die elektrische Anzündeinheit 26, bei der es sich bei diesem Ausführungsbeispiel um einen sogenannten Schichtbrückenzünder mit Initialstoff handelt, wird durch einen definierten elektrischen Impuls gezündet. (Die Konstruktion und äußere Form der Anzündeinheit 26 hat keinerlei Auswirkungen auf die beschriebene erfindungsgemäße Lehre.) Bei Verwendung des Rohrgasgenerators gemäß Figur 1 als Druckgaserzeuger in einem Airbag wird dieser elektrische Impuls beispielsweise durch Schließen eines Trägheitsschalters im Falle eines Zusammenstoßes des Kraftfahrzeuges mit einem anderen Gegenstand an die Anzündeinheit 26 angelegt. In der Anzündeinheit 26 wird eine sogenannte Verstärkungsladung gezündet; die dabei entstehenden Anzündschwaden (Flamme, Gas, heiße Verbrennungsprodukte) gelangen über in der Anzündeinheit 26 vorgesehene Öffnungen 25 in den Innenraum des Innenrohres 16, wo sie die (Treibladungs-)Pellets 24 gleichmäßig und -zeitig zünden. Im Innenrohr 16 werden je nach Ausführung eine unterschiedliche Menge an gasentwickelndem Material in Gas mit einem Druck von ca. 200 bar umgesetzt. Die heißen Gase, die zu ca. 95 % aus Stickstoff bestehen, gelangen über die Gasaustrittsöffnungen 18 an den Enden des Innenrohres 16 aus diesem heraus zu den Filterpaketen 22. Die Filterpakete 22 haben die Aufgabe, die Gase zu kühlen und von Partikeln (Feststoffen) und Kondensaten zu reinigen. Die derart abgekühlten und gereinigten Gase treten über die Gasaustrittsöffnungen 14 im Außenrohr 12 aus. Der hier beschriebene Rohrgasgenerator 10 erzeugt in einer Zeit von ca. 30 ms in einem Test-volumen von 60 dm³ einen Gasdruck von ca. 3 bar.

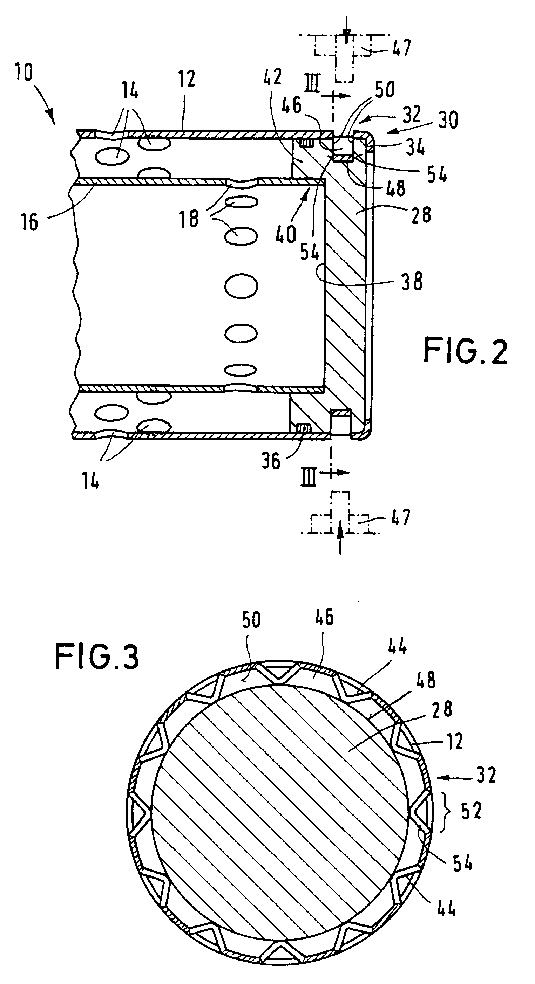

Nachfolgend wird auf die Figuren 2 und 3 eingegangen, in denen die Verbindung eines Verschlußdeckels 28 mit dem Außenrohr 12 und dem Innenrohr 16 im einzelnen dargestellt ist. Der Einfachheit halber sind in Figur 2 die Pellets 24 und die Federelemente 27 nicht eingezeichnet. Der in den Figuren 2 und 3 dargestellte Deckel 28 ist im wesentlichen scheibenförmig und in das stirnseitige Ende 30 des Außenrohres 12 eingesteckt. Dabei umschließt der Endabschnitt 32 des Außenrohres 12 den Verschlußdeckel 28 seitlich. Das stirnseitig über den Deckel 28 überstehende Ende des Außenrohres 12 ist um die Verschlußdeckel-Umlaufkante umgelegt bzw. umgebördelt, was bei 34 angedeutet ist. Zum gasdichten Abdichten des Deckels 28 gegenüber der Innenfläche des Außenrohres 12 ist ein Dichtungsring 36 in der Umfangsfläche des Deckels 28 untergebracht.

Auf seiner dem Innenrohr 16 zugewandten Innenseite ist der Deckel 28 mit einer zylindrischen Ausnehmung 38 versehen. Die Ausnehmung 38 ist konzentrisch zum Deckel 28 und umschließt den Endabschnitt 40 des Innenrohres 16 von außen. Das Innenrohr 16 steckt mit seinem Endabschnitt 40 in der Ausnehmung 38, wobei es mit seiner ringförmigen Stirnfläche am Boden der Ausnehmung 38 anliegt und im Bereich seines Endabschnittes 40 mit der Innenumfangsfläche der Ausnehmung 40 verklebt ist. Das Innenrohr 16 ist durch die Verschlußdeckel 28 zentriert gehalten; radiale Bewegungen des Innenrohres 16 relativ zum Außenrohr 12 werden vermieden.

Durch die Ausbildung der Ausnehmung 38 an der Innenseite des Verschlußdeckels 28 entsteht ein ringzylindrischer Zentriervorsprung 42, dessen Ringdicke gleich dem oder geringfügig größer als der radiale Abstand der beiden Rohre ist. Über diesen Zentriervorsprung 42 werden die bei der Druckgaserzeugung entstehenden und auf das Innenrohr 16 wirkenden radialen Kräfte auf das Außenrohr 12 übertragen, so daß an den Enden des Gasgenerators 10 durch den Zentriervorsprung 42 eine erhöhte Stabilität gegeben ist.

Neben der Bördelung 34 des Außenrohres 12 ist der Deckel 28 zusätzlich über V-förmige, nach innen vorstehende Innenvorsprünge 44 auf der Innenseite des Außenrohres 12 an diesem befestigt bzw. mit diesem verankert. Die Innenvorsprünge 44 sind in eine Ringumfangsnut 46 eingetaucht, die in die Außenumfangsfläche des Verschlußdeckels 28 eingearbeitet ist. Die Umfangsnut 46 weist einen rechteckförmigen Querschnitt auf, der von dem in Umfangsrichtung verlaufenden Nutgrund 48 und den zu diesen "rechtwinklig" und bezogen auf die Längserstreckung des Rohrgasgenerators 10 radial verlaufende Seiteninnenflächen 50 bestimmt ist. Die Breite der Umfangsnut 46 ist dabei gleich der axialen Breite der Innenvorsprünge 44. Die Innenvorsprünge 44 sind gleichmäßig über den Umfang des Außenrohres 12 in dessen Endabschnitt 32 verteilt angeordnet. Die spitz zulaufenden Enden der V-förmigen Innenvorsprünge 44 liegen an dem Boden bzw. Grund 48 der Umfangsnut 46 an. Daher tragen die Innenvorsprünge 44 zu einer Verhinderung der radialen Bewegung des Verschlußdeckels 28 relativ zum Außenrohr 12 und somit zu einer Verhinderung einer radialen Bewegung des Innenrohres 16 relativ zum Außenrohr 12 bei. Aufgrund der Aufnahme der Endabschnitte 40 des Innenrohres 16 in den Ausnehmungen 38 der Verschlußdeckel 28 und deren Verankerung mittels der in die Umfangsnuten 46 eingreifenden Innenvorsprünge 44 wird eine radiale Bewegung der Rohre relativ zueinander unterbunden.

Die Umfangsnut 46 weist einen axialen Abstand zur Ausnehmung 38 auf, wobei sie nicht im Bereich des ringförmigen Zentriervorsprunges 42 sondern von diesem beabstandet und in Richtung auf das axiale Ende des Außenrohres 12 hin verschoben angeordnet ist.

Die in den Figuren 2 und 3 gezeigten Innenvorsprünge 44 sind durch Kerbung der Außenrohr-Endabschnitte 32 mittels des in Fig. 2 bei 47 angedeuteten Kerbwerkzeuges bei eingesteckten Verschlußdeckeln 28 gebildet. Entlang einer (gedachten) Umfangsringlinie im Endabschnitt 32 werden dabei in dem Mantel des Außenrohres 12 mehrere in Figur 3 dargestellte V-förmige Vorsprünge 44 ausgebildet, bei denen es sich also um örtliche Verformungen des Außenrohres 12 in dessen Endabschnitt 32 handelt. Neben einer Verstemmung erfolgt auch ein Ausstanzen derjenigen Umfangsabschnitte 52 des Außenrohres 12 entlang der gedachten Umfangslinie, in denen durch Kerben bzw. Kneifen des Außenrohres die V-förmigen Vorsprünge 44 entstehen. Der Herstellungsprozeß der V-förmigen Vorsprünge 44 durch Kerbung des Außenrohres 12 bei gleichzeitiger Verwendung des Verschlußdeckels 28 als Matrize bewirkt dabei, daß die schmalen Seitenflächen 54 der Innenvorsprünge 44 quer zur Längserstreckung des Gasgenerators 10, also radial in Bezug auf die Längsachse des Außenrohres 12 verlaufen. Die Seitenflächen 54 (oder auch Stoßkanten) der Innenvorsprünge 44 liegen dabei an den Seiteninnenflächen 50 der Umfangsnut 46 an. Damit werden die Innenvorsprünge 44 bei axial auf den Verschlußdeckel wirkenden Kräften, wie dies bei der Zündung und Verbrennung des gasentwickelnden Materials der Fall ist, auf Scherung beansprucht. Diesen Scherkräften halten die V-förmigen Innenvorsprünge 44 jedoch zuverlässig Stand. Die Umlegung bzw. Umbördelung 34 versteift den Endabschnitt 32 des Außenrohres 12, was ein Verkanten des Verschlußdeckels 28 zusätzlich erschwert.

## Patentansprüche

1. Gasgenerator, insbesondere Rohrgasgenerator für ein aufblasbares Aufprallkissen, mit
- einem Außenrohr (12),
- Verschlußdeckeln (28) an den beiden stirnseitigen Enden (30) des Außenrohres (12), wobei das Außenrohr (12) die Verschlußdeckel (28) zumindest teilweise seitlich umschließt, und
- einer Umfangsnut (46) an der Umfangsfläche eines jeden Verschlußdeckels (28), die nach innen gerichtete Innenvorsprünge (44) in dem den jeweiligen Verschlußdeckel (28) umschließenden Endabschnitt (32) des Außenrohres (12) aufnimmt,
- wobei die Innenvorsprünge (44) als einzelne, durch Mehrfachkerbung der die Verschlußdeckel (28) umschließenden Endabschnitte (32) des Außenrohres (12) im Bereich der Umfangsnuten (26) des Verschlußdeckels (28) entstandene, gestanzte, nach innen gerichtete und im wesentlichen V-förmige Außenrohrverformungen ausgebildet sind.

2. Gasgenerator nach Anspruch 1, dadurch gekennzeichnet, daß das Außenrohr (12) an seinen Enden jeweils über die Verschlußdeckel (28) übersteht, wobei dieser Ringüberstand (34) um den Verschlußdeckelrand (28) umgelegt ist.

3. Gasgenerator nach Anspruch 1 oder 2, dadurch gekennzeichnet, daß in dem Außenrohr (12) ein Innenrohr (16) zum Aufnehmen von gasentwickelndem Material (24) angeordnet ist und daß jeder Verschlußdeckel (28) an seiner dem stirnseitigen Ende des Innenrohres (16) zugewandten Innenseite eine Ausnehmung (38) aufweist, in die der stirnseitige Endabschnitt (40) des Innenrohres (16) eingesteckt ist und die das Innenrohr (16) an dessen stirnseitigem Ende umschließt.

## Claims

1. A gas generator, in particular a tubular gas generator for an inflatable impact cushion, with
- an outer tube (12),
- closure covers (28) at both ends (30) of the outer tube (12), wherein the outer tube (12) at least partially surrounds the closure covers (28) laterally, and
- a peripheral groove (46) on the peripheral surface of each closure cover (28), which receives interior projections (44) directed inwardly in the end section (32) of the outer tube (12), surrounding the respective closure cover (28),
- wherein the interior projections (44) are formed as individual, punched, substantially V-shaped outer tube deformations, directed inwardly by multiple notching of the end sections (32) of the outer tube (12), surrounding the closure covers (28), in the region of the peripheral grooves (26) of the closure cover (28).

2. A gas generator according to claim 1, characterised in that the outer tube (12) extends at its ends in each case beyond the closure cover (28), with this annular projection (34) being laid over the closure cover edge (28).

3. A gas generator according to claim 1 or 2, characterised in that arranged in the outer tube (12) there is an inner tube (16) for receiving gas-producing material (24) and in that each closure cover (28) has on its inner side facing the end of the inner tube (16) a recess (38), into which the end section (40) of the inner tube (16) is inserted and which surrounds the inner tube (16) at its end.

## Revendications

1. Générateur de gaz, en particulier générateur de gaz tubulaire pour un coussin gonflable, comprenant
- un tube extérieur (12),
- des couvercles de fermeture (28) aux deux extrémités frontales (30) du tube extérieur (12), le tube extérieur (12) entourant les couvercles de fermeture (28) latéralement au moins partiellement, et
- une gorge circonférentielle (46) dans la surface périphérique de chaque couvercle de fermeture (28), gorge gui reçoit des saillies intérieures (44) ménagées vers l'intérieur dans la partie d'extrémité (32) du tube extérieur (12) entourant le couvercle de fermeture (28) respectif,
- les saillies intérieures (44) étant constituées par des déformations discrètes, essentiellement en V du tube extérieur produites par entaillage multiple et emboutissage vers l'intérieur, sur les parties d'extrémité (32) du tube extérieur (12), entourant les couvercles de fermeture (28), dans la zone des gorges périphériques (26) des couvercles de fermeture (28).

2. Générateur de gaz suivant revendication 1, caractérisé par le fait que le tube extérieur (12) dépasse les couvercles de fermeture (28) à ses extrémités, la partie annulaire dépassante (38) étant rabattue autour du bord du couvercle de fermeture (28).

3. Générateur de gaz suivant revendication 1 ou 2, caractérisé par le fait qu'un tube intérieur (16) est disposé dans le tube extérieur (12) pour recevoir du matériau (24) dégageant du gaz et que chaque couvercle de fermeture (28) présente, sur son côté intérieur tourné vers l'extrémité frontale du tube intérieur (16), un évidement (38) dans laquelle la partie d'extrémité frontale (40) du tube intérieur (16) est emboîtée et qui entoure le tube intérieur (16) à l'extrémité frontale de ce dernier.
